# EUROPÄISCHE PATENTSCHRIFT

(11) **EP 2 431 873 B1**
(45) Veröffentlichungstag und Bekanntmachung des Hinweises auf die Patenterteilung: **09.10.2019**
(21) Anmeldenummer: 11178374.2
(22) Anmeldetag: 23.08.2011
(51) Int. Cl.: G06F 8/60, G06F 8/61, H04L 12/18, H04L 12/24, H04L 29/08

(54) **Kombinierte Unicast/Multicast Softwareübertragung**
Combined unicast/multicast software transmission
Transmission logicielle combinée monodiffusion/multidiffusion

(30) Priorität: 16.09.2010 DE 102010045683
(43) Veröffentlichungstag der Anmeldung: 21.03.2012
(73) Patentinhaber: Heidelberger Druckmaschinen AG, 69115 Heidelberg (DE)
(72) Erfinder: Hessenauer, Udo, 69151 Neckargemünd (DE); Husterer, Thomas, 69245 Bammental (DE); Kramer, Ulrich, 74918 Angelbachtal (DE)

(56) Entgegenhaltungen:
- EP-A1- 1 748 360
- US-A1- 2006 235 949
- US-A1- 2006 239 195
- US-A1- 2007 244 982

## Beschreibung

Die vorliegende Erfindung betrifft ein Verfahren zur Übertragung von Software bestehend aus Softwaremodulen von einem zentralen Rechner an wenigstens zwei weitere Rechner, wobei der zentrale Rechner und die wenigstens zwei weiteren Rechner über eine Kommunikationsverbindung zur Datenübertragung verbindbar sind.

Bei vielen Geräten und Maschinen, welche über eine Software gesteuerte elektronische Steuerungsvorrichtung verfügen und einen Internetanschluss aufweisen, erfolgt die Aktualisierung der Steuerungssoftware, wie z. B. der Firmware oder des Betriebssystems, in regelmäßigen Abständen durch Software, welche von einem zentralen Rechner des Herstellers der Maschinen und Geräte oder des Software Herstellers über das Internet und über ein etwaiges vorhandenes lokales Intranet an die Maschinen und Geräte übertragen wird. Wenn die Software vollständig an die Geräte übertragen wurde, so wird die alte Software durch die neue Software ersetzt und die Maschine kann mit der neuen Firmware oder dem neuen Betriebssystem arbeiten. Bei der Übertragung zur Aktualisierung der Software wird grundsätzlich zwischen zwei Übertragungsverfahren unterschieden, dem so genannten Multicast Verfahren und dem so genannten Unicast Verfahren. Beim Multicast Verfahren sendet der zentrale Rechner an alle Maschinen und Geräte die gleiche Software, so dass sämtliche Teilnehmer mit den gleichen Softwaredaten versorgt werden. Beim Unicast Verfahren baut der zentrale Rechner zu jedem Teilnehmer eine individuelle Verbindung auf und kann so jedem Teilnehmer eine individuelle Software zusenden.

Aus dem Patent US 5,727,002 geht ein Verfahren zur Übertragung von Software von einem zentralen Rechner an mehrere zu aktualisierende Rechner hervor, bei dem das Multicast Verfahren zur Datenübertragung und das Unicast Verfahren zur Datenübertragung miteinander kombiniert werden. Dabei wird die zu übertragende Software vom zentralen Rechner an die zu aktualisierenden Rechner blockweise in kleinen Paketen übertragen, so wie dies üblicherweise bei Internetverbindungen nach dem TCP/IP Protokoll oder im Mobilfunk bei der paketorientierten Datenübertragung gemäß GPRS oder UMTS üblich ist. Zunächst überträgt der zentrale Rechner dabei die Datenpakete im Multicast Verfahren an alle angeschlossenen Teilnehmer. Wenn einer der angeschlossenen Teilnehmer ein übertragenes Datenpaket mit einer negativen Rückmeldung beantwortet, so weiß der zentrale Rechner, dass dieses negativ zurückgemeldete Datenpaket nochmals gesendet werden muss. Diese negative Rückmeldung kann verschiedene Gründe haben, entweder wurde das Paket gar nicht empfangen, oder beim Empfang des Pakets ist bei einem oder mehreren Teilnehmern ein Übertragungsfehler aufgetreten. Nachdem der zentrale Rechner sämtliche Datenpakete der gesamten Software übertragen hat, findet eine zweite Übertragungsrunde statt, bei der nur die nicht korrekt empfangenen Datenpakete gesendet werden. Diese Übertragung der nicht korrekt empfangenen Datenpakete erfolgt dann im Unicast Verfahren, da nur die jeweils nicht korrekt übertragenen Datenpakete individuell an den betroffenen Teilnehmer gesendet werden.

Dieses Verfahren hat jedoch den Nachteil, dass es sich nicht dazu eignet, Software an mehrere Empfänger zu verschicken, wobei die Software zumindest in Teilen in Bezug auf die Empfänger individualisiert ist. Dieser Fall tritt jedoch bei der Aktualisierung von Steuerungssoftware für Druckmaschinen und Maschinen in der grafischen Industrie häufig auf, da Druckmaschinen in den unterschiedlichsten Konfigurationen mit einer unterschiedlichen Anzahl von Druckwerken, Lackwerken und Steuerungskomponenten auch abhängig vom gewünschten Grad der Automatisierung ausgeliefert werden und so die Steuerungssoftware für fast jede Druckmaschine zumindest teilweise individuell ist. Dies bedeutet, dass beim Austausch der Firmware oder des Betriebssystems eine Druckmaschinensteuerung zumindest kleine Teile dieser auszutauschenden Software nicht identisch sind, so dass bei einem Update der Software auf diese individuellen Softwareteile Rücksicht genommen werden muss.

Aus der europäischen Patentanmeldung EP 1 748 360 A1 gehen ein Verfahren und ein System zum parallelisierten Ausführen eines Software-Updates bei mindestens zwei Steuergeräten mittels einer von mindestens zwei Anwendungen, die mittels eines Multitasking fähigen Betriebssystems auf einem Computer parallel ausführbar sind, hervor. Die mindestens zwei Steuergeräte sind miteinander über ein Datenbus-System sowie mit einem Computer verknüpft, wobei in das Betriebssystem eine Datenschnittstelle eingepasst ist. Bei dem Verfahren wird ein Kommunikationskanal zwischen einer der mindestens zwei Anwendungen und einem der mindestens zwei Steuergeräte über die in das Betriebssystem eingepassten Daten pro Schnittstelle hergestellt. Des Weiteren wird ein weiterer Kommunikationskanal zu einem weiteren der mindestens zwei Steuergeräte ausgebildet und ein Softwareupdate auf dem weiteren der mindestens zwei Steuergeräte über diesen weiteren Kommunikationskanal durchgeführt.

Aus der Patentanmeldung US 2006/0235949 A1 geht ein Verfahren zur Durchführung eines Firmware-Updates in einem Netzwerk hervor. Dazu weist das Netzwerk einen Firmware-Server auf, einen Initiator des Update-Vorgangs und eine Mehrzahl von elektronischen Geräten. Zunächst sendet der Firmware-Update-Initiator einen Update-Befehl zu jedem der elektronischen Geräte. Im Gegenzug wird von jedem der elektronischen Geräte ein Firmware-Update-Wunsch an den Firmware-Update-Server übertragen. Von dem Firmware-Update-Server wird dann eine entsprechende Firmware-Update-Software für jedes der elektronischen Geräte übertragen, so dass jedes der elektronischen Geräte mit dem Firmware-Update auf den neuesten Stand gebracht wird.

Aus der Patentanmeldung US 2006/239195 geht ein Verfahren zum Verteilen eines Software-Updates entweder in einem Unicast-Modus oder einem Multicast-Modus an eine Vielzahl von Knoten in einem Netzwerk.

Es ist daher Aufgabe der vorliegenden Erfindung, ein Verfahren zur Übertragung von Software, bestehend aus standardisierten Softwareteilen und individuell an den Empfänger angepassten Softwareteilen zu schaffen, welches eine möglichst Ressourcen sparende und schnelle Datenübertragung von einem zentralen Rechner an mehrere angeschlossene Rechner erlaubt.

Diese Aufgabe wird erfindungsgemäß durch Patentanspruch 1 gelöst, vorteilhafte Ausgestaltungen der Erfindung sind den Unteransprüchen und den Zeichnungen zu entnehmen. Das erfindungsgemäße Verfahren dient zur Übertragung von Software, wie z. B. von Firmware oder von einem Betriebssystem, welches aus mehreren Softwaremodulen besteht. Ein Teil dieser Softwaremodule ist standardisiert und wird an jeden Rechner, dessen Firmware bzw. Betriebssystem zu aktualisieren ist, übertragen. Ein anderer Teil der Software besteht aus individuellen Softwaremodulen, welche nicht an alle zu aktualisierenden Rechner übertragen wird, sondern nur individualisiert an einige Teilnehmer. Grundsätzlich eignet sich dieses Verfahren zur Übertragung beliebiger Software, welche zumindest teilweise an zu aktualisierende Rechner angepasst ist. Dabei wir die zu aktualisierende Software von einem zentralen Rechner, welcher der Steuerungsrechner der Druckmaschine sein kann, an die zu aktualisierenden dezentralen Rechner in der Druckmaschine übertragen. Die Maschinen und Geräte stehen bei den Betreibern der Geräte und Maschinen, wobei die Software auf den Steuerungsrechner der Druckmaschine per Internet oder mittels Datenträger übertragen werden kann. In der Druckmaschine wird die Software vom Steuerungsrechner an die dezentralen Modulrechner über ein Netzwerk wie Ethernet oder CAN-Bus übertragen.

Bei dem erfindungsgemäßen Verfahren baut der zentrale Rechner zu Beginn der Übertragung der Software zunächst zu den weiteren Rechnern, welche die Software empfangen, eine Netzwerkverbindung auf und fragt die Eigenschaften bzw. Konfiguration der weiteren Rechner ab. Die weiteren Rechner melden ihre Eigenschaften bzw. Konfigurationen an den zentralen Rechner zurück, so dass dieser die Eigenschaften und Konfigurationen der weiteren Rechner kennt. In Abhängigkeit der zurückgemeldeten Eigenschaften und Konfigurationen bestimmt der zentrale Rechner nun, welche Softwaremodule im Multicast Verfahren übertragen werden und welche Softwaremodule im Unicast Verfahren übertragen werden. Im Multicast Verfahren werden dabei diejenigen Softwaremodule an die weiteren Rechner übertragen, welche für alle Rechner gleich sind. Im Unicast Verfahren werden diejenigen Softwaremodule übertragen, welche zumindest bei einigen Rechnern individuell ausgestaltet sind. Somit werden zunächst alle Rechner mit den gleichen Softwaremodulen im Multicast Verfahren versorgt und dann in einem weiteren Schritt die individuellen Softwaremodule im Unicast Verfahren übertragen. Diese Vorgehensweise sorgt dafür, dass möglichst viel Software im ressourcenschonenden und zeitsparenden Multicast Verfahren übertragen wird, da nur die individuellen Softwaremodule im Unicast Verfahren übertragen werden müssen.

In einer ersten Ausgestaltung der Erfindung ist vorgesehen, dass die Multicast und die Unicast Verbindungen zwischen dem zentralen Rechner und den weiteren Rechnern gleichzeitig bestehen. In diesem Fall baut der zentrale Rechner über das Netzwerk zu jedem dezentralen Rechner in der Maschine eine Multicast Verbindung und zu den dezentralen Rechnern, welche individuelle Softwaremodule benötigen, zusätzlich parallel Unicast Verbindungen auf. Auf diese Art und Weise besteht die Multicast und Unicast Übertragung parallel und kann damit besonders zeitsparend genutzt werden.

In einer weiteren Ausgestaltung der Erfindung ist vorgesehen, dass bei der Übertragung der Module der Software mehrmals zwischen dem Übertragungsmodus Unicast Übertragung und Multicast Übertragung durch den zentralen Rechner hin- und hergewechselt wird. Auch in diesem Fall können zunächst Multicast und Unicast Verbindungen parallel aufgebaut werden, es wird jedoch zunächst ein erstes Softwaremodul im Multicast Verfahren übertragen und dann in einem zweiten Schritt individuelle Softwaremodule im Unicast Verfahren. Dies kann dann mehrmals wiederholt werden, bis alle Softwaremodule für das Multicast und alle Softwaremodule für das Unicast Verfahren an die angeschlossenen weiteren Rechner übertragen worden sind.

Es ist des Weiteren vorgesehen, dass der zentrale Rechner die Module der Software in Blöcke unterteilt und blockweise an die weiteren Rechner überträgt, wobei die maximale Blockgröße dem Minimum der von den weiteren Rechnern unterstützten maximalen Blockgröße entspricht. Selbst die Module der Software weisen üblicherweise eine Dateigröße auf, welche nicht in einem Paket oder Block übertragen werden kann. Große Blöcke haben außerdem den Nachteil, dass bei einer fehlerhaften Übertragung eines Blocks der gesamte große Block nochmals übertragen werden muss, was entsprechend Zeit kostet. Daher sollten die zu übertragenden Blöcke der Module nicht zu groß sein. Die maximale Blockgröße wird jedoch von der maximalen Blockgröße der angeschlossenen weiteren Rechner vorgegeben. Da zumindest Teile der Software im Multicast Verfahren übertragen werden, muss zunächst das Minimum der von den weiteren Rechnern unterstützten maximalen Blockgröße ermittelt werden. Andernfalls wäre die Blockgröße für zumindest einen der weiteren Rechner zu groß, so dass dieser die im Multicast Verfahren übertragenen zu großen Blöcke der Softwaremodule nicht empfangen kann. Wenn also das Minimum der von den weiteren Rechnern unterstützen maximalen Blockgröße ermittelt wurde, so zerlegt der zentrale Rechner die Module der Software in genau diese maximale Blockgröße, welche dem Minimum der von den weiteren Rechnern unterstützten maximalen Blockgröße entspricht. Dieses Ermitteln der maximal zulässigen Blockgröße findet am Anfang des Datenübertragungsvorgangs vor dem ersten Versenden der Softwaremodule im Multicast oder Unicast Verfahren statt.

In einer weiteren Ausgestaltung der Erfindung ist vorgesehen, dass eine individuelle Rückmeldung eines jeden der weiteren Rechner ein Signal zum Abbruch der Übertragung oder ein Signal zur erneuten Empfangsbereitschaft enthält. Nach jedem übertragenen Block eines Softwaremoduls an einen der weiteren Rechner, meldet der weitere Rechner entweder einen Fehler, indem er ein Abbruchsignal zurückmeldet, ober er meldet seine erneute Empfangsbereitschaft, wenn alle Daten korrekt übertragen worden sind. Auf diese Art und Weise erfährt der zentrale Rechner, bei welchen Rechnern Fehler bei der Datenübertragung im Netzwerk aufgetreten sind.

Dabei ist besonders vorteilhafterweise vorgesehen, dass der zentrale Rechner jeden der weiteren dezentralen Rechner, der einen Abbruch signalisiert oder nicht innerhalb der vorgegebenen Maximalzeit eine Rückmeldung abgegeben hat, aus der Multicast Übertragung ausschließt und die Übertragung weiterer Blöcke der Softwaremodule für Multicast Übertragung mit den verbliebenen der weiteren Rechner fortsetzt. Erfindungsgemäß ist dabei eine maximale Antwortzeit für eine Rückmeldung der weiteren Rechner an den zentralen Rechner vorgegeben. Wenn innerhalb dieser Zeitspanne einer der weiteren Rechner ein Abbruchsignal schickt oder innerhalb dieser vorgegebenen Maximalzeit überhaupt keine Rückmeldung abgibt, so ist davon auszugehen, dass ein Fehler in der Datenübertragung aufgetreten ist. In diesem Fall müsste ein zuvor möglicherweise im Multicast Verfahren versendetes Datenpaket eines Softwaremoduls zur Multicast Übertragung wiederholt werden. Dies würde jedoch den Ablauf für die anderen Rechner stören, so dass bei dieser bevorzugten Ausführungsform derjenige Rechner, welcher nicht geantwortet oder einen Abbruch signalisiert hat, aus der Multicast Übertragung ausgeschlossen wird, so dass die Übertragung weiterer Blöcke der Softwaremodule für Multicast Übertragungen unbeeinflusst mit den verbliebenen der weiteren Rechner fortgesetzt werden kann. Die vom Multicast Verfahren ausgeschlossenen weiteren Rechner können dann nach Abschluss der Multicast Übertragungen zu den anderen Rechner im Unicast Verfahren nochmals mit den fehlerhaft übertragenen Blöcken der Softwaremodule versorgt werden. Es ist auch möglich, die nicht antwortenden oder einen Fehler signalisierenden Rechner bei der nächsten Runde der Multicast Übertragung wieder einzubinden und in dieser Runde wiederum mit Multicast Softwaremodulen zu versorgen. Dabei vermerkt der zentrale Rechner, welche Rechner während eines Multicast Verfahrens zu welchem Zeitpunkt einen Fehler gemeldet haben, und versorgt diese Rechner am Ende der Datenübertragung nochmals mit den als fehlerhaft empfangenen gemeldeten Blöcken der Softwaremodule.

Der große Vorteil des erfindungsgemäßen Verfahrens besteht darin, dass für Multicast Übertragung geeignete Softwaremodule nicht redundant übertragen werden müssen und die Software trotzdem individuelle Anteile aufweisen kann.

Die vorliegend Erfindung wird nachfolgend anhand zweier Figuren näher beschrieben und erläutert. Es zeigen:
- Figur 1: ein Netzwerk bestehend aus einem zentralen Steuerungsrechner und angeschlossenen weiteren Rechnern, welche ein Softwareupdate vom zentralen Steuerungsrechner empfangen und
- Figur 2: den Ablauf der erfindungsgemäßen Übertragung der Softwaremodule im Multicast bzw. Unicast Verfahren.

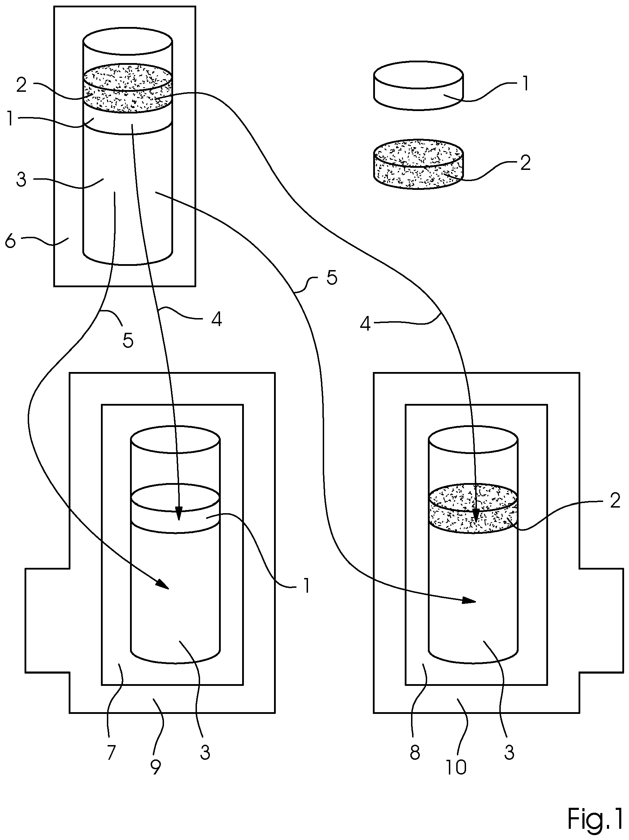

In Figur 1 sind schematisch ein zentraler Steuerungsrechner 6 einer Druckmaschine und beispielhaft zwei weitere dezentrale Rechner 7, 8 in zwei Druckwerken 9,10 abgebildet, welche von dem zentralen Steuerungsrechner 6 mit einem Softwareupdate versorgt werden. Bei dem zentralen Rechner 6 handelt es sich dabei um den Steuerungsrechner 6 einer Druckmaschine, welcher Softwareupdates für Firmware über eine Netzwerkverbindung an die Rechner 7, 8 in den Druckwerken 9, 10 überträgt. Der Steuerungsrechner 6 erhält das Softwareupdate über das Internet per Fernwartung oder mittels Datenträger. Die Rechner 7, 8 sind über eine Netzwerk- Verbindung wie z. B. Ethernet oder CAN-Bus mit dem Steuerungsrechner 6 verbunden. Die von dem Steuerungsrechner 6 versendete Firmware besteht aus mehreren Softwaremodulen 1, 2, 3. Wie Figur 1 zu entnehmen ist, ist der größte Teil der Software für die Rechner 7, 8 identisch und wird als Multicast Modul 3 bezeichnet. Da Druckwerke 9, 10 jedoch in den unterschiedlichsten Konfigurationen und mit den unterschiedlichsten Steuerungskomponenten verkauft werden, gibt es auch Softwaremodule, welche für jedes Druckwerk 9, 10 individuell ausgestaltet sind. Dabei ist das erste Softwaremodul 1 an die Eigenschaften des ersten Druckwerks 9 angepasst, während das zweite Softwaremodul 2 an die Eigenschaften des zweiten Druckwerks 10 angepasst ist.

Gemäß der vorliegenden Erfindung wird nun das Multicast Modul 3 an sämtliche Rechner 7, 8 übertragen, während das erste Unicast Modul 1 lediglich an den Rechner 7 des ersten Druckwerks 9 und das zweite Unicast Modul 2 nur an den Rechner 8 des zweiten Druckwerks 10 übertragen wird. Erst wenn alle Module 1, 2, 3 vollständig an den jeweiligen Rechner 7, 8 übertragen worden sind, wird die bisherige Firmware in den weiteren Rechnern 7,8 durch die neue Firmware bestehend aus den Softwaremodulen 1, 2, 3 ausgetauscht und so die Steuerung der Druckwerke 9, 10 aktualisiert. Sowohl die Multicast Übertragung 5 als auch die Unicast Übertragung 4 können über die gleiche Netzwerkverbindung vorgenommen werden. Die vorliegende Erfindung ist selbstverständlich nicht auf zwei dezentrale Rechner 7, 8 beschränkt, sondern kann mit beliebig vielen weiteren Rechnern 11 durchgeführt werden. So können zugleich viele Rechner 7,8, 11 zeitsparend mit neuer Firmware versorgt werden.

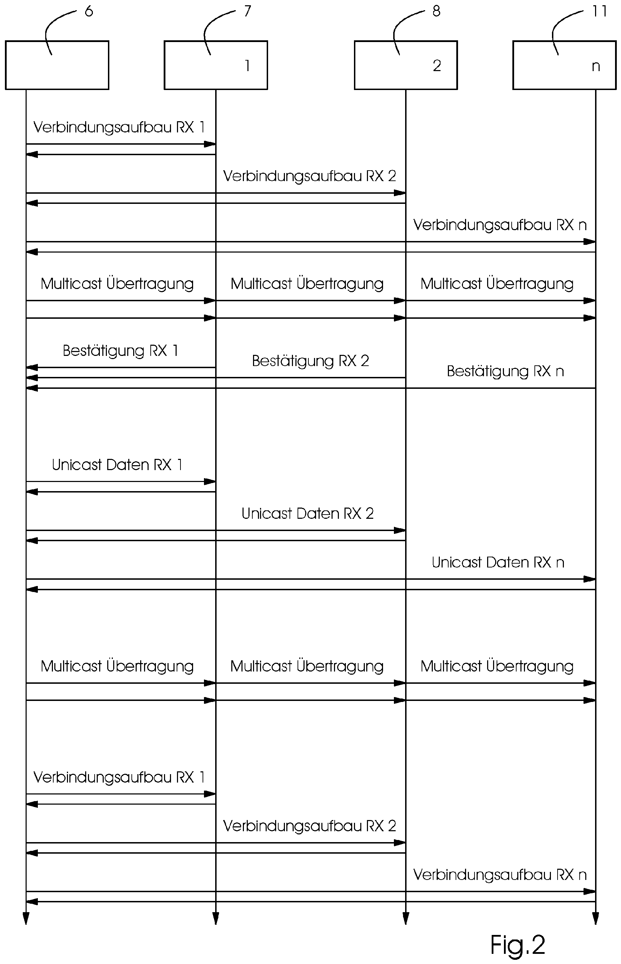

Die Figur 2 zeigt einen Ablauf des Übertragungsvorgangs der Softwaremodule 1,2,3 aus Figur 1. Oben sind die Teilnehmer wie der Steuerungsrechner 6, der erste und zweite Rechner 7, 8 und beliebig viele weitere Rechner 11 abgebildet. Die Anzahl der Rechner 7, 8, 11 spielt dabei keine Rolle. Wie in Figur 1 wird bei der Softwareverteilung in Figur 2 davon ausgegangen, dass die zu aktualisierende Firmware in weiten Teilen identisch ist. Der Steuerungsrechner 6 verteilt dabei die neue Firmware entsprechend den Abläufen in Figur 2. Dazu baut der Steuerungsrechner 6 zu jedem Rechner 7, 8, 11 zunächst eine Unicast Verbindung 4 zum Beschreiben des Programmspeichers auf. Dabei entsteht ein Datenstromobjekt, welches sequentiell beschrieben werden kann und zum Beschreiben des Programmspeichers der Rechners 7, 8, 11 führt. Nach dieser Initialisierung versucht der Steuerungsrechner 6 die Rechner 7, 8, 11 zu einer Multicast Gruppe zu verbinden. Dazu verwendet er ein im Datenstromobjekt definiertes Protokollkommando. Dieses Kommando übermittelt alle relevanten Verbindungsparameter für die Multicast Verbindung 5. Der angesprochene Rechner 7, 8, 11 beantwortet dieses Kommando, indem er dem Steuerungsrechner 6 seine Eigenschaften mitteilt, wozu auch zählt, ob er überhaupt Multicast fähig ist und wie groß gegebenenfalls seine maximal empfangbare Blockgröße ist. Alle Rechner 7, 8, 11, welche vom Steuerungsrechner 6 als Multicast fähig erkannt worden sind, befinden sich nun in der Multicast Gruppe. Simultan dazu besteht eine Unicast Kommunikationsverbindung 4, die im Steuerungsrechner 6 durch ein einziges Datenstromobjekt repräsentiert ist.

Wie bereits erwähnt ist die Firmware für die Rechner 7, 8, 11 in den wesentlichen Teilen gleich, es besteht lediglich ein kleiner Teil von beispielsweise 200 Bytes im Vergleich zu 2,5 Megabytes der gesamten Firmware, der als sogenannter Image Header individualisiert ist. In diesen Image Header ist z. B. der Einbauort des Rechners 7, 8 in der Druckmaschine eingetragen. Dieser individualisierte Image Header ist nicht Multicast fähig und wird im Unicast Verfahren 4 übertragen. Der Steuerungsrechner 6 überträgt den Anfang der Firmware per Multicast Verfahren 5 an alle teilnehmenden Rechner 7, 8, 11 der Multicast Gruppe. Dabei werden alle Daten nur jeweils einmal gesendet und gleichzeitig von allen Mitgliedern der Multicast Gruppe empfangen. Der individualisierte Teil der Firmware wird im Unicast Verfahren 4 an jeden Rechner 7, 8, 11 einzeln übertragen. Der Rest der Firmware wird dann wieder im Multicast Verfahren 5 an alle Rechner 7, 8, 11 gleichzeitig übertragen. Dieser Vorgang kann beliebig oft wiederholt werden. Wenn die Übertragung aller Softwaremodule 1, 2, 3 beendet ist, so werden die Multicast Verbindungen 5 und Unicast Verbindungen 4 geschlossen und die Firmware Übertragung ist abgeschlossen.

Bei der blockweisen Übertragung der Softwaremodule 1, 2, 3 entspricht die maximale Blockgröße dem Minimum der von allen beteiligten Rechnern 7, 8, 11 unterstützten maximalen Blockgröße. Dabei ist vorgesehen, dass nach dem letzten Fragment eines jeden Blocks der Steuerungsrechner 6 eine vorgegebene maximale Zeit auf eine individuelle Rückmeldung jedes Rechners 7, 8, 11 wartet. Die Rückmeldung kann einen Abbruch der Übertragung oder die erneute Empfangsbereitschaft des Rechners 7, 8, 11 signalisieren. Die Blockgestaltung hängt im Wesentlichen von Fehlererkennungsalgorithmen ab, mit denen der Rechner 7, 8, 11 Übertragungsfehler erkennen kann. Nach jedem Multicast Übertragungsvorgang entfernt am Ende eines Fragments eines zu übertragenden Blocks der Steuerungsrechner 6 alle Rechner 7, 8,11, die einen Abbruch signalisiert haben oder nicht innerhalb der vorgegebenen Maximalzeit geantwortet haben, aus der Multicast Gruppe und setzt die Übertragung mit den restlichen Rechnern 7, 8, 11 der Multicast Gruppe fort. Die ausgeschlossenen Rechner können gegebenenfalls zu einem späteren Zeitpunkt im Unicast Verfahren 4 nochmals mit den fehlerhaft gemeldeten Blöcken der Softwaremodule 1, 2, 3 versorgt werden.

In Figur 2 ist zu erkennen, wie die Verbindungen aufgebaut werden und wann die Bestätigung durch die Rechner 7, 8, 11 erfolgt. Abhängig von diesen Bestätigungen und den Eigenschaften der Softwaremodule 1, 2, 3 werden dann abwechselnd im Multicast 5 und Unicast Verfahren 4 die entsprechenden Softwaremodule 1, 2, 3 vom Steuerungsrechner 6 an die weiteren Rechner 7, 8, 11 übertragen. Der große Vorteil der Erfindung liegt darin, dass für alle Rechner 7, 8, 11 gleiche Softwaremodule 3 im Multicast Verfahren 5 übertragen werden, so dass gleiche Softwaremodule 3 nicht redundant übertragen werden müssen.

### Bezugszeichenliste

- 1: Unicast Modul 1
- 2: Unicast Modul 2
- 3: Multicast Modul
- 4: Unicast Übertragung
- 5: Multicast Übertragung
- 6: Steuerungsrechner
- 7: Rechner erstes Druckwerk
- 8: Rechner zweites Druckwerk
- 9: erstes Druckwerk
- 10: zweites Druckwerk
- 11: weitere Rechner

## Patentansprüche

1. Verfahren zur Übertragung von Software bestehend aus Softwaremodulen (1, 2, 3) von einem zentralen Rechner (6) an wenigstens zwei weitere Rechner (7, 8,11), wobei der zentrale Rechner (6) und die wenigstens zwei weiteren Rechner (7,8,11) über eine Kommunikationsverbindung zur Datenübertragung verbindbar sind, **gekennzeichnet durch folgende Verfahrensschritte,**
- Aufbau einer Verbindung zu den wenigstens zwei weiteren Rechnern (7,8,11) durch den zentralen Rechner (6),
- Abfrage der Eigenschaften der wenigstens zwei weiteren Rechner (7,8,11) durch den zentralen Rechner (6),
- Bestimmung der Softwaremodule (1, 2, 3) als Multicast fähig in Abhängigkeit der zurückgemeldeten Eigenschaften durch den zentralen Rechner (6),
- Übertragung durch den zentralen Rechner (6) an die wenigstens zwei weiteren Rechner (7,8,11) der für die Multicast Übertragung (5) geeigneten Softwaremodule (3), welche für alle Rechner (7, 8, 11) gleich sind, und
- Aufbau einer Unicast Verbindung (4) für diejenigen Module (1,2) der Software zu den wenigstens zwei weiteren Rechnern (7,8) durch den zentralen Rechner (6), welche nicht Multicast fähig und zumindest bei einigen Rechnern (7, 8, 11) individuell ausgestaltet sind.

2. Verfahren nach Anspruch 1,
**dadurch gekennzeichnet,**
**dass** die Multicast (5) und die Unicast (4) Verbindungen zwischen dem zentralen Rechner (6) und den weiteren Rechnern (7,8,11) gleichzeitig bestehen.

3. Verfahren nach Anspruch 1 oder 2,
**dadurch gekennzeichnet,**
**dass** die Software ein Betriebssystem oder eine Firmware ist, welche aus Modulen (1) geeignet zur Multicast Übertragung (5) und aus individualisierten Modulen (2,3) zur Unicast Übertragung (4) besteht.

4. Verfahren nach einem der vorhergehenden Ansprüche,
**dadurch gekennzeichnet,**
**dass** bei der Übertragung der Module (1,2,3) der Software mehrmals zwischen dem Übertragungsmodus Unicast Übertragung (4) und Multicast Übertragung (5) durch den zentralen Rechner (6) hin- und hergewechselt wird.

5. Verfahren nach einem der vorhergehenden Ansprüche,
**dadurch gekennzeichnet,**
**dass** der zentrale Rechner (6) die Module (1,2,3) der Software in Blöcke unterteilt und blockweise an die weiteren Rechner (7,8,11) überträgt, wobei die maximale Blockgröße dem Minimum der von den weiteren Rechnern (7,8,11) unterstützten maximalen Blockgröße entspricht.

6. Verfahren nach Anspruch 5,
**dadurch gekennzeichnet,**
**dass** nach der Übertragung des letzten Fragments eines Blocks bei der Übertragung der Module (1,2,3) der Software der zentrale Rechner (6) eine vorgegebene Zeit auf eine individuelle Rückmeldung eines jeden der weiteren Rechner (7,8,11) wartet.

7. Verfahren nach Anspruch 6,
**dadurch gekennzeichnet,**
**dass** die individuelle Rückmeldung eines jeden der weiteren Rechner (7,8,11) ein Signal zum Abbruch der Übertragung oder ein Signal zur erneuten Empfangsbereitschaft enthält.

8. Verfahren nach Anspruch 7,
**dadurch gekennzeichnet,**
**dass** der zentrale Rechner (6) jeden der weiteren Rechner (7,8,11), der einen Abbruch signalisiert oder nicht innerhalb der vorgegebenen Maximalzeit eine Rückmeldung abgegeben hat, aus der Multicast Übertragung (5) ausschließt und die Übertragung weiterer Blöcke der Softwaremodule (3) für Multicast Übertragung (5) mit den verbliebenen der weiteren Rechner (7,8,11) fortsetzt.

9. Verfahren nach einem der vorhergehenden Ansprüche,
**dadurch gekennzeichnet,**
**dass** der zentrale Rechner (6) und die weiteren Rechner (7,811) eine Schnittstelle für einen CAN-Bus oder eine Ethernet-Schnittstelle aufweisen.

10. Verfahren nach einem der vorhergehenden Ansprüche,
**dadurch gekennzeichnet,**
**dass** die weiteren Rechner (7,8,11) die dezentralen Rechner einer Bedruckstoffe verarbeitenden Maschine (9,10) sind.

## Claims

1. Method for transmitting software consisting of software modules (1, 2, 3) from a central computer (6) to at least two further computers (7, 8, 11), wherein the central computer (6) and the at least two further computers (7, 8, 11) are connectible by a communication link for transmitting data,
**characterized by the following steps of**
- establishing a connection with the at least two further computers (7, 8, 11) by means of the central computer (6),
- enquiring the characteristics of the at least two further computers (7, 8, 11) by means of the central computer (6),
- identifying, by means of the central computer (6), the software modules (1, 2, 3) that are multicast compatible as a function of the characteristics that have been reported back,
- transmitting the software modules (3) that are compatible with multicast transmission (5) and identical for all computers (7, 8, 11) to the at least two further computers (7, 8, 11) by means of the central computer (6),
- establishing, by means of the central computer (6), a unicast connection (4) with the at least two further computers (7, 8) for the software modules (1, 2) that are not multicast-compatible and are individualized at least for some computers (7, 8, 11)

2. Method according claim 1,
**characterized**
**in that** the multicast (5) and unicast (4) connections between the central computer (6) and the further computers (7, 8, 11) exist simultaneously.

3. Method according to claim 1 or 2,
**characterized**
**in that** the software is an operating system or firmware consisting of modules (1) that are suitable for multicast transmission (5) and of individualized modules (2, 3) for unicast transmission (4).

4. Method according to any one of the preceding claims,
**characterized**
**in that** during the transmission of the modules (1, 2, 3) of the software, the central computer (6) switches multiple times between the unicast transmission (4) mode and the multicast transmission mode (5).

5. Method according to any one of the preceding claims,
**characterized**
**in that** the central computer (6) subdivides the modules (1, 2, 3) of the software into blocks and transmits them block by block to the further computers (7, 8, 11) with a maximum block size corresponding to the minimum of the maximum block size supported by the further computers (7, 8, 11).

6. Method according to claim 5,
**characterized**
**in that** after a transmission of the last fragment of a block of the transmission of the modules (1, 2, 3) of the software, the central computer (6) waits a defined period of time for an individual feedback from every one of the further computers (7, 8, 11).

7. Method according to claim 6,
**characterized**
**in that** the individual feedback of every one of the further computers (7, 8, 11) includes a signal to abort the transmission or a signal for renewed readiness to receive.

8. Method according to claim 7,
**characterized**
**in that** the central computer (6) eliminates every further computer (7, 8, 11) that signals an abort or has not given feedback within the defined maximum period of time from the multicast transmission (5) and continues the transmission of further blocks of the software modules (3) for the multicast transmission (5) with the remaining further computers (7, 8, 11).

9. Method according to any one of the preceding claims,
**characterized**
**in that** the central computer (6) and the further computers (7, 8, 11) have a CAN bus or Ethernet interface.

10. Method according to any one of the preceding claims,
**characterized**
**in that** the further computers (7, 8, 11) are the decentralized computers of a machine (9, 10) for processing printing materials.

## Revendications

1. Procédé de transfert de logiciel se composant de modules logiciels (1,2, 3), d'un ordinateur central (6) relié à deux autres ordinateurs au moins (7, 8,11), pour lequel l'ordinateur central (6) et les deux autres ordinateurs au moins (7,8,11) peuvent être reliés par une liaison de communication pour la transmission des données,
**caractérisé par les étapes de procédé suivantes,**
- établissement d'une connexion vers les deux autres ordinateurs au moins (7,8,11) par l'ordinateur central (6),
- interrogation des caractéristiques des deux autres ordinateurs au moins (7,8,11) par l'ordinateur central (6),
- détermination des modules logiciels (1, 2, 3) comme aptes à la transmission multicast en fonction des caractéristiques retransmises par l'ordinateur central (6),
- transmission par l'ordinateur central (6) aux deux autres ordinateurs au moins (7,8,11) des modules logiciels (3) appropriés pour la transmission multicast (5) identiques pour tous les ordinateurs (7, 8, 11) et
- constitution d'une liaison unicast (4) pour les modules considérés (1,2) du logiciel par l'ordinateur central (6), vers les deux autres ordinateurs au moins (7,8) qui ne sont pas aptes à la transmission multicast et sont conçus individuellement pour au moins certains ordinateurs (7, 8,11).

2. Procédé selon la revendication 1,
**caractérisé en ce**
**que** les liaisons multicast (5) et unicast (4) entre l'ordinateur central (6) et les autres ordinateurs (7,8,11) coexistent.

3. Procédé selon la revendication 1 ou 2,
**caractérisé en ce**
**que** le logiciel est un système d'exploitation ou un microprogramme composé de modules (1) appropriés pour la transmission multicast (5) et de modules individualisés (2,3) pour la transmission unicast (4).

4. Procédé selon l'une des revendications précédentes,
**caractérisé par les étapes de procédé suivantes,**
que lors de la transmission des modules (1,2,3) du logiciel, il y a plusieurs fois commutation entre les modes de transmission unicast (4) et multicast (5) par l'ordinateur central (6).

5. Procédé selon l'une des revendications précédentes,
**caractérisé en ce**
**que** l'ordinateur central (6) subdivise les modules (1,2,3) du logiciel en blocs et les transmets par blocs aux autres ordinateurs (7,8,11), la taille de bloc maximale correspondant au minimum de la taille de bloc maximale prise en charge par les autres ordinateurs (7,8,11).

6. Procédé selon la revendication 5,
**caractérisé en ce**
**qu'**après la transmission du dernier fragment d'un bloc lors de la transmission des modules (1,2,3) du logiciel, l'ordinateur central (6) attend pendant un temps prédéfini un signal en retour individuel de chacun des autres ordinateurs (7,8,11).

7. Procédé selon la revendication 6,
**caractérisé en ce**
**que** le signal en retour individuel de chacun des autres ordinateurs (7,8,11) renferme un signal pour l'abandon de la transmission ou un signal pou une nouvelle disponibilité de réception.

8. Procédé selon la revendication 7,
**caractérisé en ce**
**que** l'ordinateur central (6) exclut chacun des autres ordinateurs (7,8,11) qui signale un abandon ou n'a pas émis de signal en retour durant le temps maximal prédéfini de la transmission multicast (5) et poursuit la transmission des blocs suivants des modules logiciels (3) pour la transmission multicast (5) avec les autres ordinateurs restants (7,8,11).

9. Procédé selon l'une des revendications précédentes,
**caractérisé en ce**
**que** l'ordinateur central (6) et les autres ordinateurs (7,811) présentent une interface pour un bus CAN ou une interface Ethernet.

10. Procédé selon l'une des revendications précédentes,
**caractérisé en ce**
**que** les autres ordinateurs (7,8,11) sont les ordinateurs décentralisés d'une machine de traitement d'un support d'impression (9,10).
